# EUROPÄISCHE PATENTSCHRIFT

(11) **EP 0 608 678 B1**
(45) Veröffentlichungstag und Bekanntmachung des Hinweises auf die Patenterteilung: **22.11.1995**
(21) Anmeldenummer: 93890206.1
(22) Anmeldetag: 20.10.1993
(51) Int. Cl.: B65H 3/08, B65H 5/08, B65H 3/36

(54) **Vorrichtung zum Entnehmen von plattenförmigen Gegenständen**
Device for picking plate shaped articles
Dispositif pour prélever des objets en forme de plaque

(30) Priorität: 25.01.1993 AT 110/93
(43) Veröffentlichungstag der Anmeldung: 03.08.1994
(73) Patentinhaber: ELBAK MASCHINENBAU GmbH, A-8055 Graz, Steiermark (AT)
(72) Erfinder: Schwetz, Anton, Ing., A-8273 Ebersdorf (AT); Russow, Rudolf, Ing., A-8114 Stübing (AT); Lupu, Mihail, Dipl.-Ing., A-8063 Eggersdorf (AT)
(74) Vertreter: Beer, Otto

(56) Entgegenhaltungen:
- EP-B- 0 141 806
- WO-A-92/01619
- US-A- 3 041 068

## Beschreibung

Die Erfindung betrifft eine Vorrichtung zum Entnehmen von plattenförmigen Gegenständen, insbesondere von Akkumulatorplatten, aus einem Stapel derartiger Gegenstände und zum Ablegen der Gegenstände auf eine Fördereinrichtung, mit einem jeweils einen Gegenstand erfassenden Greifer, der vorzugsweise wenigstens einen mit Unterdruck beaufschlagbaren Saugkopf aufweist, und der zwischen einer den ersten Gegenstand des Stapels erfassenden Entnahmestellung und einer Abgabestellung, die der Fördereinrichtung zugeordnet ist, hin- und herbewegbar ist, wobei der Greifer an einem in der Vorrichtung verschwenkbar gelagerten Hebel gelagert ist.

Eine derartige Vorrichtung ist beispielsweise aus der EP-B 141 806 bekannt.

Bei den bekannten Vorrichtungen ist die Frequenz, mit der einzelne Platten aus dem Stapel entnommen werden können, begrenzt, da nicht nur die den Greifer tragenden Hebel, sondern auch der Greifer selbst eine hin- und hergehende Schwenkbewegung ausführen, wenn die jeweils vorderste Platte aus dem Stapel entnommen und zu einer Fördereinrichtung bewegt wird.

Der Erfindung liegt die Aufgabe zu Grunde, die Vorrichtung der eingangs genannten Gattung so weiterzubilden, daß die Frequenz, mit der Platten aus dem Stapel entnommen werden können, größer als bisher sein kann.

Gelöst wird diese Aufgabe mit der Erfindung dadurch, daß der Greifer am Hebel um eine zu dessen Schwenkachse parallel ausgerichtete Drehachse um 360° verdrehbar gelagert ist, und daß dem Greifer ein Antrieb zum Drehen in einer einzigen Drehrichtung zugeordnet ist.

Dank der erfindungsgemäßen Ausbildung der Vorrichtung führt der Greifer bezüglich des ihn tragendes Hebels eine Drehbewegung aus, sodaß der Greifer bezüglich des ihn tragenden Hebels nicht mehr wie bisher hin- und herbewegt werden muß.

Ein Vorteil der erfindungsgemäßen Vorrichtung besteht auch darin, daß sich die Hin- und Herbewegung des den Greifer tragenden Hebels und die Drehbewegung des Greifers relativ zum Hebel überlagert, so daß insgesamt ein gleichmäßiger Bewegungsablauf erzielt wird.

In einer Ausführungsform der Erfindung kann vorgesehen sein, daß der Greifer gegenüber dem ihn tragenden Hebel stillsteht, wenn sich dieser in seiner der Entnahmestellung entsprechenden Schwenkstellung befindet. Bei dieser Ausführungsform steht der Greifer in der Entnahmestellung still, d.h. er führt im Moment der Bewegungsumkehr des ihn tragenden Hebels, welche dem Moment entspricht, in der sich der Hebel in seiner der Entnahmestellung entsprechenden Lage befindet, keine Drehbewegung aus. Dadurch erfolgt die Übernahme bzw. das Ergreifen der vordersten Platte des Stapels bei nicht bewegtem Greifer und daher sicher.

Diese ungleichförmige aber stets gleichsinnige Drehbewegung des Greifers gegenüber dem ihn drehenden Hebel kann durch eine Kombination einer Kupplung mit einer Bremse oder aber durch eine elektronische Steuerung der Bewegung des Greifers gegenüber dem ihn tragenden Hebel erreicht werden. Besonders bevorzugt ist es im Rahmen der Erfindung aber, daß der Antrieb den Greifer in einer ungleichförmigen Bewegung dreht, und daß die Drehgeschwindigkeit des Greifers gegenüber dem ihn tragenden Hebel beim Annähern an die Entnahmestellung des Greifers verringert ist und in der Entnahmestellung vorzugsweise auf Null verringert ist.

Die erfindungsgemäße Konzeption der Vorrichtung erlaubt auch eine Ausführungsform, die sich dadurch auszeichnet, daß zwei Hebel vorgesehen sind, die um dieselbe Achse verschwenkbar gelagert sind, und daß jeder Hebel einen Greifer trägt, wobei beide Greifer in dieselbe Entnahmestellung und in dieselbe Abgabestellung bewegbar sind. Dadurch kann ohne Erhöhung der Frequenz der Bewegung der Hebel, welche die Greifer tragen, die Frequenz des Umsetzens von plattenförmigen Gegenständen aus dem Magazin auf die Fördereinrichtung verdoppelt werden.

In einer praktischen Ausführungsform der erfindungsgemäßen Vorrichtung ist vorgesehen, daß die Hebel gegenläufige Schwenkbewegungen ausführen, und daß sich einer der Hebel in der Entnahmestellung befindet, wenn sich der andere Hebel der Abgabestellung annähert und umgekehrt. Bevorzugt ist dabei, daß für das Hin- und Herbewegen der Hebel ein Kurbeltrieb vorgesehen ist.

Bei dieser Ausführungsform ist der Drehantrieb für das Bewegen der Greifer gegenüber den sie tragenden Hebeln so eingerichtet, daß die Greifer an den Hebeln stets in unterschiedliche, vorzugsweise in entgegengesetzte Richtungen weisen. Dadurch ist gewährleistet, daß sich die beiden Greifer bei ihren Bewegungen nicht gegenseitig behindern.

Bevorzugt ist im Rahmen der Erfindung, daß für den Antrieb des Greifers bzw. der Greifer ein Schrittgetriebe vorgesehen ist, das mit einer Antriebswelle gekuppelt ist, die koaxial zur Schwenkachse des bzw. der Hebel angeordnet ist, und daß der bzw. beide Greifer zum Drehen derselben mit dieser einen Antriebswelle gekuppelt sind.

Auf diese Weise ist mit einfachen Mitteln gewährleistet, daß die Bewegungen der Greifer gegenüber den sie tragenden Hebeln synchronisiert sind.

Bevorzugt ist dabei, daß auf der Antriebswelle ein Antriebsrad bzw. Antriebsräder befestigt ist bzw. sind, das bzw. die mit einem bzw. zwei an dem bzw. den Hebeln gelagerten Antriebswellenstummel(n) des Greifers bzw. der Greifer gekuppelt ist bzw. sind. Bei dieser Ausführungsform ist von Vorteil, daß der Antrieb für die Greifer zum Ausführen ihrer Drehbewegung gegenüber den sie tragenden Hebeln die Bewegungen der Hebel selbst nicht behindert oder nachteilig beeinflußt.

Diese Ausführungsform erlaubt auch eine Weiterbildung der Erfindung in der Richtung, daß die Antriebswellenstummel der Greifer von den die Greifer tragenden Hebeln frei auskragen und aufeinanderzu weisen, daß die Greifer von der Seite gesehen im wesentlichen L-förmig ausgebildet sind, wobei jeder Greifer, insbesondere dessen den an ihm vorgesehenen Saugkopf tragenden Teil, den Antriebswellenstummel des anderen Greifers überlappt, und daß sich beide Greifer in derselben Bewegungsbahn bewegen. Dadurch ergibt sich eine kompakte Bauweise der erfindungsgemäßen Vorrichtung, bei der sich die Greifer dennoch in identischen Bewegungsbahnen bewegen.

Die erfindungsgemäße Vorrichtung kann sich auch dadurch auszeichnen, daß zum Wegschieben von plattenförmigen Gegenständen von dem sich in der Abgabestellung befindlichen Greifer auf den Anfang der Fördereinrichtung sich in Förderrichtung bewegende Mitnehmer vorgesehen sind. Mit dieser Maßnahme wird das Übergeben von plattenförmigen Gegenständen von dem sich in der Abgabestellung befindlichen Greifer auf die Fördereinrichtung zuverlässig ausgeführt.

Um die Bewegung der Mitnehmer, welche die plattenförmigen Gegenstände vom Greifer auf die Fördereinrichtung schieben, mit der Bewegung der Greifer zu synchronisieren, kann im Rahmen der Erfindung vorgesehen sein, daß die Mitnehmer an wenigstens einem Endlosförderglied befestigt sind, das über Antriebs- und Umlenkräder umläuft, wobei die Antriebsräder mit der Antriebswelle für das Drehen der Greifer gekuppelt sind.

Wenn bei der erfindungsgemäßen Vorrichtung die Antriebswellenstummel Rohrstücke sind, die über hohle Achsstummel gesteckt sind, wobei das Beaufschlagen des Saugkopfes des Greifers mit Unterdruck über den Antriebswellenstummel, den Achsstummel und den hohl ausgebildeten Hebel erfolgt, wobei im Antriebswellenstummel und im Achsstummel Löcher vorgesehen sind, die sich überdecken bzw. überlappen, wenn sich der Greifer von der Entnahmestellung zur Abgabestellung bewegt, dann kann vorgesehen sein, daß die Verbindung des Greifers mit der Unterdruckquelle unterbrochen wird, kurz bevor der Greifer die Entnahmestellung erreicht hat. Diese Maßnahme hat insbesondere bei Verwendung der erfindungsgemäßen Vorrichtung zum Entnehmen luftdurchlässiger Gegenstände, wie Akkumulatorplatten, den Vorteil, daß sich der Unterdruck, durch den die Platte am Greifer bzw. dessen Saugkopf festgehalten wird, abbaut, bis der Mitnehmer die Platte auf die Fördereinrichtung schiebt, sodaß diese Bewegung problemlos erfolgen kann.

Weitere Einzelheiten und Merkmale der Erfindung ergeben sich aus der nachstehenden Beschreibung eines bevorzugten Ausführungsbeispieles der Vorrichtung gemäß der Erfindung, in der auf die angeschlossenen Zeichnungen Bezug genommen wird. Es zeigt
Fig. 1 eine Vorrichtung in Seitenansicht,
Fig. 2 die Vorrichtung von rechts der Fig. 1 aus gesehen,
Fig. 3 die Vorrichtung im Schnitt längs der Linie AA in Fig. 2 und
Fig. 4 eine Draufsicht auf die erfindungsgemäße Vorrichtung.

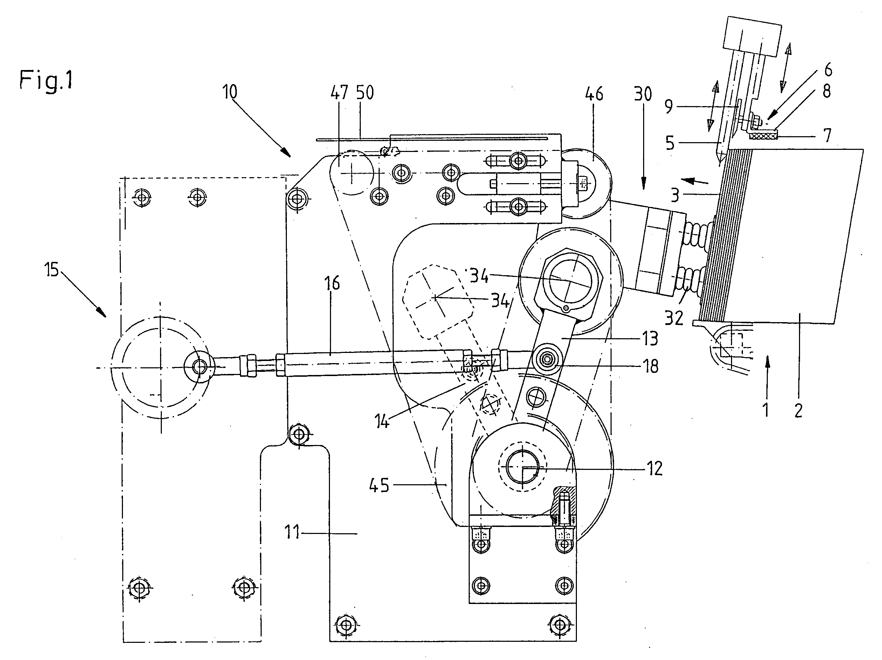

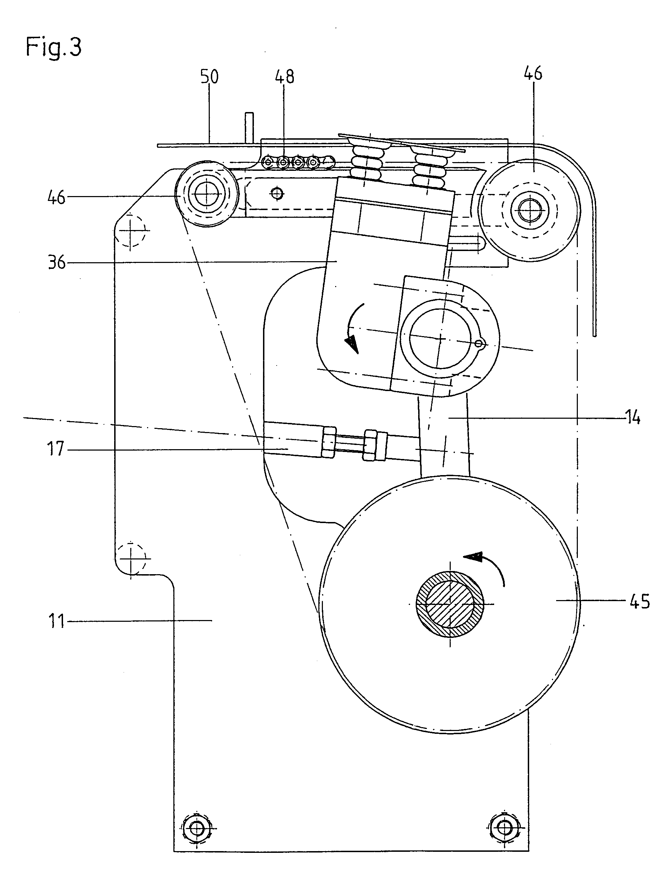

Wie Fig. 1 zeigt, ist die Vorrichtung zum Entnehmen von plattenförmigen Gegenständen - im gezeigten Ausführungsbeispiel sind dies Akkumulatorplatten - dem abgabeseitigen Ende eines Magazins 1 zugeordnet, das so wie in der AT-PS 379 565, der AT-PS 387 294 oder der EP-B 141 806 ausgebildet sein kann und das einen Stapel 2 aus Akkumulatorplatten 3 enthält. Die Niederhaltevorrichtung 4 am Entnahmeende des Magazins 1 ist so wie in Fig. 3 der EP-B 141 806 beschrieben ausgebildet, wobei der neben dem Anschlag 5 vorgesehene Niederhalter 6 eine von oben am Stapel 2 anliegende, mit einem Schaumstoffbelag 7 versehene Niederhalteplatte 8 aufweist und mit einer Klinge 9 zwischen die vorderste und die nachfolgende Platte 3 eingreift. Der Anschlag 5 und der Niederhalter 6 sind, so wie in der EP-B 141 806 beschrieben, von Druckmittelmotoren abwechselnd auf und ab verschiebbar.

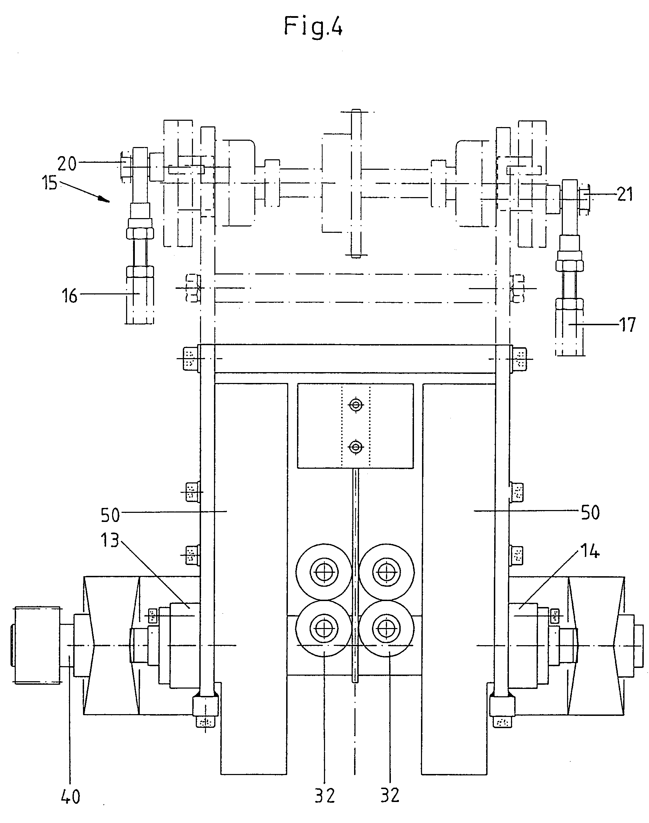

Die Entnahmevorrichtung 10 besitzt ein Maschinengestell 11, in dem um eine horizontale Achse 12 verschwenkbar zwei Hebel 13 und 14 gelagert sind. Für den Antrieb der Hebel 13 und 14 ist ein Kurbeltrieb 15 vorgesehen, der über Schubstangen 16 und 17 mit den Hebeln 13 und 14 gekuppelt ist. Die Schubstangen 16 und 17 sind an Lagerzapfen 18 der Hebel 13 und 14 angeschlossen. Wie insbesondere Fig. 4 zeigt, sind die Kurbelzapfen 20, 21 des Kurbeltriebes 15 gegeneinander um versetzt, sodaß die Hebel 13 und 14 eine phasenverschobene Schwenkbewegung um ihre Schwenkachse 12 ausführen.

Jeder Hebel 13 und 14 trägt an seinem freien Ende einen Greifer 30 bzw. 31, wobei jeder Greifer 30, 31 mit vier Saugköfen 32 ausgerüstet ist.

Die Greifer 30 und 31 sind auf an den Hebeln 13 bzw. 14 befestigten Achsstummeln 33 um zur Schwenkachse 12 der Hebel 13 und 14 parallele Achsen 34 verdrehbar gelagert. Hiezu besitzen die Greifer 30 und 31 je einen Antriebswellenstummel 35, der im gezeigten Ausführungsbeispiel mit dem im wesentlichen L-förmig ausgebildeten Greiferkörper 36, der die Saugköpfe 32 trägt, einstückig ausgebildet ist.

Der Antrieb zum Verdrehen jedes der beiden Greifer 30 und 31 gegenüber den Hebeln 13 und 14 besteht im gezeigten Ausführungsbeispiel aus einem mit dem Antriebswellenstummel 35 verbundenen Zahnriemenscheibe 37, einem Zahnriemen 38, der die Zahnriemenscheibe 37 mit einer weiteren Zahnriemenscheibe 39 verbindet. Die weiteren Zahnriemenscheiben 39 der Drehantriebe für die beiden Greifer 30 und 31 sind mit einer Antriebswelle 40 verbunden, die gleichzeitig die Lagerachse für die Hebel 13 und 14 bildet. Die Antriebswelle 40 wird über einen Zahnriemen- oder Rollenkettenantrieb 41 von einem Schrittgetriebe 42 angetrieben.

An Stelle der Zahnriemenantriebe für das Verdrehen der Greifer 30 und 31 können auch Rollenkettenantriebe vorgesehen sein.

Auf der Antriebswelle 40 sind weiters zwei Zahnräder 45 befestigt. Über die Zahnräder 45 und zwei weitere, im Maschinengestell 11 gelagerte Umlenkräder 46 und 47 läuft eine endlose Rollenkette 48, an der Mitnehmer 49 befestigt sind. Im Maschinengestell 11 sind oben Gleitbleche 50 montiert, die zu einer in den Zeichnungen nicht dargestellten, sich senkrecht zur Bildebene von Fig. 1 erstreckenden Fördereinrichtung führen, mit der die dem Stapel 2 entnommenen Akkumulatorplatten 3 abtransportiert werden.

Das Beaufschlagen der Saugköpfe 32 der Greifer 30 und 31 mit Unterdruck erfolgt über zu einer Unterdruckquelle führende Leitungen 60, die in den hohl ausgebildeten Hebeln 13 und 14 münden. Mit dem Hohlraum 61 in den Hebeln 13 und 14 steht ein Hohlraum 62 in den Achsstummeln 33 in Verbindung. Dieser Hohlraum 62 steht seinerseits (zeitweise) mit dem Hohlraum 63 in den Körpern 36 der Greifer 30 bzw. 31 in Verbindung. Die Verbindung der Hohlräume 62 und 63 erfolgt über eine im Achsstummel 33 vorgesehene Öffnung 64, die mit dem Hohlraum 63 im Körper 36 der Greifer 30 und 31 nur in Verbindung steht, wenn sich der Greifer 30 oder 31 aus der in Fig. 1 gezeigten Entnahmestellung in die in Fig. 3 gezeigte Abgabestellung bewegt. Dabei ist die Anordnung der Öffnung 64 so getroffen, daß der Hohlraum 63 im Körper 36 der Greifer 30 und 31 vom Hohlraum 62 im Achsstummel 33 abgesperrt wird, wenn sich der Greifer 30, 31 kurz vor der in Fig. 3 gezeigten Entnahmestellung befindet. Auf diese Weise kann sich der Unterdruck im Hohlraum 63 und in den Saugköpfen 32 der Greifer 30 und 31 bis zum endgültigen Erreichen der Abgabestellung abbauen (Akkumulatorplatten sind luftdurchlässig), so daß die Akkumulatorplatte 3 von den Mitnehmern 49 ohne Probleme von den Saugköpfen 32 auf die Gleitbleche 50 geschoben und entlang dieser zum Anfang der Fördereinrichtung weiterbewegt werden kann.

Die Öffnung 64 ist weiters so ausgerichtet, daß die Saugköpfe 32 der Greifer 30 und 31 mit Unterdruck beaufschlagt werden, wenn sie sich in der in Fig. 1 gezeigten Entnahmestellung (oder kurz davor) befinden.

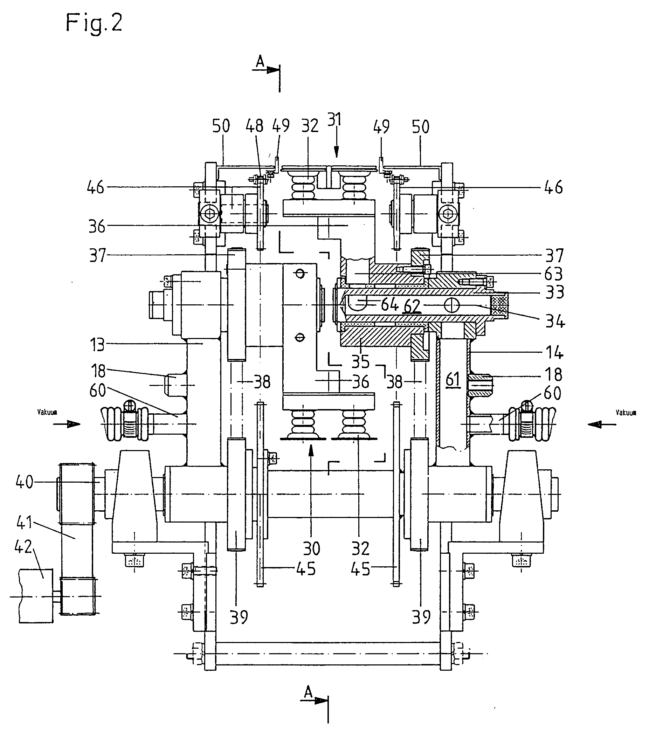

Wie in Fig. 2 gezeigt, bewegen sich die beiden Greifer 30 und 31 in ein und derselben Bewegungsbahn, ohne sich zu behindern, da sie bzw. ihre Körper 36 gewinkelt ausgebildet sind und die Achsstummel 33 von den beiden Hebeln 13 und 14 weg frei abkragend aufeinander zu weisen.

Die Mitnehmer 49 an den Rollenketten 48 sind so angeordnet, daß sie sich immer knapp vor einem sich in der Abgabestellung befindlichen Greifer 30 oder 31 befinden und unmittelbar nach dem Ablegen einer Akkumulatorplatte 3 auf den Gleitblechen 50 an dieser angreifen. Das Synchronisieren der Bewegungen der beiden Greifer 30 und 31 mit den Mitnehmern 49 ist dadurch gewährleistet, daß die Rollenketten 48, welche die Mitnehmer 49 tragen, von der Antriebswelle 40 über die Zahnräder 45 angetrieben werden, die auch die Greifer 30 und 31 antreibt.

Das Schrittgetriebe 42 ist so ausgelegt, daß die Drehbewegung der Greifer 30 und 31 gegenüber den Hebeln 13 und 14 stets in die gleiche Richtung erfolgt, wobei jedoch die Geschwindigkeit der Drehbewegung der Greifer 30 und 31 kurz vor dem Erreichen der in Fig. 1 gezeigten Entnahmestellung verringert, vorzugsweise bis auf Null verringert wird, so daß die Greifer 30 und 31 jeweils stillstehen wenn sie eine Akkumulatorplatte 3 aus dem Stapel 2 des Magazins 1 entnehmen (in diesem Moment wird der Anschlag 5 hochgezogen und die Niederhalteplatte auf den Stapel 2 abgesenkt).

Das Synchronisieren der Hin- und Herbewegungen (Schwenkbewegung) der beiden Hebel 13 und 14 mit der Drehbewegung der Greifer 30 und 31 und damit auch der Bewegungen der die Mitnehmer 49 tragenden Rollenketten 48 kann in einfacher Weise dadurch erreicht werden, daß das Schrittgetriebe 42 und der Kurbeltrieb 15 von einem gemeinsamen Hauptantrieb aus erfolgt.

Zusammenfassend kann die Erfindung beispielsweise wie folgt dargestellt werden:
Eine Vorrichtung 10 zum Entnehmen von Akkumulatorplatten 3 aus einem Stapel 2 und zum Ablegen der Akkumulatorplatten 3 auf eine Fördereinrichtung besitzt zwei abwechselnd wirksame Greifer 30, 31. Die Greifer 30, 31 werden abwechselnd in eine die erste Akkumulatorplatte 3 des Stapels 2 erfassende Entnahmestellung und in eine Abgabestellung, die der Fördereinrichtung zugeordnet ist, bewegt. Die Greifer 30, 31 sind an in der Vorrichtung verschwenkbar gelagerten Hebeln 13, 14 gelagert. Jeder Greifer 30, 31 ist an seinem Hebel 13, 14 um eine zu dessen Schwenkachse 12 parallel ausgerichtete Drehachse 34 um 360° verdrehbar gelagert und wird mit einem Antrieb 42, 40 in einer Richtung gedreht. Um das Erfassen einer Akkumulatorplatte 3 zu verbessern stehen die Greifer 30, 31 gegenüber dem sie tragenden Hebel 13, 14 still, wenn sich diese in ihrer der Entnahmestellung entsprechenden Schwenkstellung befinden. Dadurch, daß die Greifer 30, 31 eine Drehbewegung ausführen, kann die Frequenz der Entnahme von Akkumulatorplatten 3 aus dem Stapel 2 problemlos gesteigert werden.

## Patentansprüche

1. Vorrichtung (10) zum Entnehmen von plattenförmigen Gegenständen (3), insbesondere von Akkumulatorplatten, aus einem Stapel (2) derartiger Gegenstände (3) und zum Ablegen der Gegenstände (3) auf eine Fördereinrichtung, mit einem jeweils einen Gegenstand erfassenden Greifer (30, 31), der vorzugsweise wenigstens einen mit Unterdruck beaufschlagbaren Saugkopf (32) aufweist, und der zwischen einer den ersten Gegenstand (3) des Stapels (2) erfassenden Entnahmestellung und einer Abgabestellung, die der Fördereinrichtung zugeordnet ist, hin- und herbewegbar ist, wobei der Greifer (30, 31) an einem in der Vorrichtung verschwenkbar gelagerten Hebel (13, 14) gelagert ist, dadurch gekennzeichnet, daß der Greifer (30, 31) am Hebel (13, 14) um eine zu dessen Schwenkachse (12) parallel ausgerichtete Drehachse (34) um 360° verdrehbar gelagert ist, und daß dem Greifer (30, 31) ein Antrieb (42, 40) zum Drehen in einer Drehrichtung zugeordnet ist.

2. Vorrichtung nach Anspruch 1, dadurch gekennzeichnet, daß der Greifer (30, 31) gegenüber dem ihn tragenden Hebel (13, 14) stillsteht, wenn sich dieser in seiner der Entnahmestellung entsprechenden Schwenkstellung befindet.

3. Vorrichtung nach Anspruch 2, dadurch gekennzeichnet, daß der Antrieb (42, 40) den Greifer (30, 31) in einer ungleichförmigen Bewegung dreht, und daß die Drehgeschwindigkeit des Greifers (30, 31) gegenüber dem ihn tragenden Hebel (13, 14) beim Annähern an die Entnahmestellung des Greifers (30, 31) verringert ist und in der Entnahmestellung vorzugsweise auf Null verringert ist.

4. Vorrichtung nach einem der Ansprüche 1 bis 3, dadurch gekennzeichnet, daß zwei Hebel (13, 14) vorgesehen sind, die um dieselbe Achse (12) verschwenkbar gelagert sind, und daß jeder Hebel (13, 14) einen Greifer (30, 31) trägt, wobei beide Greifer in dieselbe Entnahmestellung und in dieselbe Abgabestellung bewegbar sind.

5. Vorrichtung nach Anspruch 4, dadurch gekennzeichnet, daß die Hebel (13, 14) gegenläufige Schwenkbewegungen ausführen, und daß sich einer der Hebel (13, 14) der Entnahmestellung annähert, wenn sich der andere Hebel (13, 14) in der Abgabestellung befindet und umgekehrt.

6. Vorrichtung nach Anspruch 5, dadurch gekennzeichnet, daß für das Hin- und Herbewegen der Hebel (13, 14) ein Kurbeltrieb (15, 16, 17) vorgesehen ist.

7. Vorrichtung nach einem der Ansprüche 4 bis 6, dadurch gekennzeichnet, daß die Greifer (30, 31) an den Hebeln (13, 14) stets in unterschiedliche, vorzugsweise in entgegengesetzte Richtungen weisen.

8. Vorrichtung nach einem der Ansprüche 1 bis 7, dadurch gekennzeichnet, daß für den Antrieb des Greifers bzw. der Greifer (30, 31) ein Schrittgetriebe (42) vorgesehen ist, das mit einer Antriebswelle (40) gekuppelt ist, die koaxial zur Schwenkachse (12) des bzw. der Hebel (13, 14) angeordnet ist, und daß der bzw. beide Greifer (30, 31) zum Drehen derselben mit dieser einen Antriebswelle (40) gekuppelt sind.

9. Vorrichtung nach Anspruch 8, dadurch gekennzeichnet, daß auf der Antriebswelle (40) ein Antriebsrad bzw. Antriebsräder (39) befestigt ist bzw. sind, das bzw. die mit einem bzw. zwei an dem bzw. den Hebeln (13, 14) gelagerten Antriebswellenstummel(n) (35) des Greifers bzw. der Greifer (30, 31) gekuppelt ist bzw. sind.

10. Vorrichtung nach Anspruch 9, dadurch gekennzeichnet, daß die Antriebswellenstummel (35) der Greifer (30, 31) von den die Greifer (30, 31) tragenden Hebeln (13, 14) frei auskragen und aufeinanderzu weisen, daß die Greifer (30, 31) von der Seite gesehen im wesentlichen L-förmig ausgebildet sind, wobei jeder Greifer (30, 31), insbesondere dessen den an ihm vorgesehenen Saugkopf (32) tragenden Teil (36) den Antriebswellenstummel (35) des anderen Greifers (30, 31) überlappt, und daß sich beide Greifer (30, 31) in derselben Bewegungsbahn bewegen.

11. Vorrichtung nach einem der Ansprüche 1 bis 10, dadurch gekennzeichnet, daß zum Wegschieben von plattenförmigen Gegenständen (3) von dem sich in der Abgabestellung befindlichen Greifer (30, 31) auf den Anfang der Fördereinrichtung sich in Förderrichtung bewegende Mitnehmer (49) vorgesehen sind.

12. Vorrichtung nach Anspruch 11, dadurch gekennzeichnet, daß die Mitnehmer (49) an wenigstens einem Endlosförderglied (48) befestigt sind, das über Antriebs- und Umlenkräder (45, 46, 47) umläuft, wobei die Antriebsräder (45) mit der Antriebswelle (40) für das Drehen der Greifer (30, 31) gekuppelt sind.

13. Vorrichtung nach einem der Ansprüche 8 bis 12, dadurch gekennzeichnet, daß die Antriebswellenstummel (35) Rohrstücke sind, die über hohle Achsstummel (33) gesteckt sind, wobei das Beaufschlagen des Saugkopfes (32) des Greifers (30, 31) mit Unterdruck über den Antriebswellenstummel (35), den Achsstummel (33) und den hohl ausgebildeten Hebel (13, 14) erfolgt, wobei im Antriebswellenstummel (35) und im Achsstummel (33) Löcher (64) vorgesehen sind, die sich überdecken bzw. überlappen, wenn sich der Greifer (30, 31) von der Entnahmestellung zur Abgabestellung bewegt, dann kann vorgesehen sein, daß die Verbindung des Greifers (30, 31) mit der Unterdruckquelle unterbrochen wird, kurz bevor der Greifer (30, 31) die Entnahmestellung erreicht hat.

## Claims

1. Device (10) for removing plate-shaped articles (3), particularly accumulator plates, from a stack (2) of such articles (3), and for depositing the articles (3) on a conveyor device, with a gripper (30, 31) grasping one respective article, and which preferably has at least one suction head (32) chargeable with low pressure, and which is movable to and fro between a removal position in which it grasps the first article (3) of the stack (2), and a delivery position which is associated with the conveyor device, the gripper, (30, 31) being mounted on a lever (13, 14) pivotal in the device, characterised in that the gripper (30, 31) is mounted on the lever (13, 14) to rotate through 360° about an axis of rotation (34) parallel to its pivotal axis (12), and that there associated with the gripper (30, 31) a drive means (42, 40) for rotation in one direction of rotation.

2. Device according to Claim 1, characterised in that the gripper (30, 31) is stationary relative to the lever (13, 14) carrying it, when the latter is located in its pivotal position corresponding to the removal position.

3. Device according to Claim 2, characterised in that the drive means (42, 40) rotates the gripper (30, 31) in an irregular movement, and in that the speed of rotation of the gripper (30, 31) relative to the lever (13, 14) carrying it is reduced upon its approach to the removal position of the gripper (30, 31), and is preferably reduced to zero in the removal position.

4. Device according to one of Claims 1 to 3, characterised in that two levers (13, 14) are provided which are mounted to pivot about the same axis (12), and in that each lever (13, 14) carries a gripper (30, 31), both grippers being movable into the same removal position and into the same delivery position.

5. Device according to Claim 4, characterised in that the levers (13, 14) execute pivotal movements in opposite directions, and in that one of the levers (13, 14) approaches the removal position when the other lever (13, 14) is located in the delivery position, and vice versa.

6. Device according to Claim 5, characterised in that a crank drive (15, 16, 17) is provided for the to-and-fro movement of the levers (13, 14).

7. Device according to one of Claims 4 to 6, characterised in that the gripper (30, 31) on the levers (13, 14) always have different, preferably opposed, directions.

8. Device according to one of Claims 1 to 7, characterised in that there is provided, in order to drive the gripper or grippers (30, 31), a step-by-step motion linkage (42), which is coupled to a drive shaft (40) which is disposed coaxial to the pivotal axis (12) of the lever or levers (13, 14), and in that the gripper or grippers (30, 31) is/are coupled to this one drive shaft (40) in order to receive their rotation.

9. Device according to Claim 8, characterised in that there is or are secured on the drive shaft (40) a drive wheel or drive wheels (39) which is or are coupled with one or two drive shaft stubs (35) of the gripper or grippers (30, 31) mounted on the lever or levers (13, 14).

10. Device according to Claim 9, characterised in that the drive shaft stubs (35) of the grippers (30, 31) project freely from the levers (13, 14) carrying the grippers (30, 31) and face one another, in that the grippers (30, 31), seen from the side, are in a substantial L-shape, each gripper (30, 31), particularly its portion (36) carrying its suction head (32) provided thereon, overlapping the drive shaft stub (35) of the other gripper (30, 31), and in that both grippers (30, 31) move in the same path of motion.

11. Device according to one of Claims 1 to 10, characterised in that, in order to push plate-shaped articles (3) away from the gripper (30, 31) located in the delivery position, there are provided on the beginning of the conveyor device entrainment means (49) moving in the direction of conveyance.

12. Device according to Claim 11, characterised in that the entrainment means (49) are secured on at least one endless conveyor member (48), which revolves over drive and turning wheels (45, 46, 47), the drive wheels (45) being coupled to the drive shaft (40) for rotating the grippers (30, 31).

13. Device according to one of Claims 8 to 12, characterised in that the drive shaft stubs (35) are tubular parts, which are thrust over hollow axial stubs (33), charging of the suction head (32) of the gripper (30, 31) with low pressure being effected via the drive shaft stub (35), the axial stub (33) and the hollow lever (13, 14), holes (64) being provided in the drive shaft stub (35) and in the axial stub (33), which cover or overlap one another when the gripper (30, 31) moves from the removal position to the delivery position; provision may then be made for the connection of the gripper (30, 31) to the source of low pressure to be interrupted shortly before the gripper (30, 31) has reached the removal position.

## Revendications

1. Dispositif (10) pour prélever des objets (3) en forme de plaque, en particulier des plaques d'accumulateurs, à partir d'une pile (2) de tels objets (3) et pour déposer les objets (3) sur un dispositif transporteur, comprenant un élément de préhension (30,31) saisissant respectivement un objet, cet élément présentant de préférence au moins une tête aspirante ou ventouse (32) susceptible d'être mise sous dépression et étant déplaçable en va-et-vient entre une première position de prélèvement dans laquelle il saisit le premier objet (3) de la pile et une position de transfert associée au dispositif transporteur, l'élément de préhension (30,31) étant monté sur un levier (13,14) monté pivotant dans le dispositif, caractérisé par le fait que l'élément de préhension (30,31) est monté sur le levier (13,14) de manière à pouvoir tourner de 360° autour d'un axe de rotation (34) orienté parallèlement à l'axe de pivotement (12) du levier, et qu'une commande (42,40) pour la rotation dans un sens de rotation est associée à l'élément de préhension (30,31).

2. Dispositif suivant la revendication 1, caractérisé par le fait que l'élément de préhension (30,31) est immobile par rapport au levier (13,14) qui le porte lorsque ce dernier se trouve dans sa position de pivotement correspondant à la position de prélèvement.

3. Dispositif suivant la revendication 2, caractérisé par le fait que la commande (42,40) fait tourner l'élément de préhension (30,31) suivant un mouvement non uniforme, et que la vitesse de rotation de l'élément de préhension (30,31) par rapport au levier (13,14) qui le porte est réduite à l'approche de la position de prélèvement de l'élément de préhension (30,31) et est réduite de préférence à zéro dans la position de prélèvement.

4. Dispositif suivant l'une des revendications 1 à 3, caractérisé par le fait qu'il comprend deux leviers (13,14) qui sont montés pivotants autour du même axe (12) et que chacun des leviers (13,14) porte un élément de préhension (30,31), les deux éléments de préhension pouvant être déplacés dans la même position de prélèvement et dans la même position de transfert.

5. Dispositif suivant la revendication 4, caractérisé par le fait que les leviers (13,14) effectuent des mouvements de pivotement contraires et que l'un des leviers (13,14) s'approche de la position de prélèvement lorsque l'autre levier (13,14) se trouve à la position de transfert, et inversement.

6. Dispositif suivant la revendication 5, caractérisé par le fait qu'un mécanisme à manivelle (15,16,17) est prévu pour le mouvement de va-et-vient des leviers (13,14).

7. Dispositif suivant l'une des revendications 4 à 6, caractérisé par le fait que les éléments de préhension (30,31) sur les leviers (13,14) sont tournés toujours dans des directions différentes, de préférence opposées.

8. Dispositif suivant l'une des revendications 1 à 7, caractérisé par le fait qu'il est prévu, pour la commande de l'élément de préhension ou des éléments de préhension (30,31), un mécanisme pas à pas (42) qui est couplé avec un arbre d'entraînement (40) disposé coaxialement par rapport à l'axe de pivotement (12) du ou des leviers (13,14), et que le ou les deux éléments de préhension (30,31) sont, en vue de la rotation de ces derniers, couplés avec cet arbre d'entraînement (40).

9. Dispositif suivant la revendication 8, caractérisé par le fait que sur l'arbre d'entraînement (40) est/sont fixé(s) un pignon d'entraînement/des pignons d'entraînement (39) qui est/sont couplé(s) avec un/deux bout(s) d'arbre d'entraînement (35) du/des élément(s) de préhension (30,31), monté(s) sur le/les levier(s) (13,14).

10. Dispositif suivant la revendication 9, caractérisé par le fait que les bouts d'arbre d'entraînement (35) des éléments de préhension (30,31) font librement saillie sur les leviers (13,14) portant les éléments de préhension (30,31) et sont tournés l'un vers l'autre, que les éléments de préhension (30,31) sont, vus de côté, réalisés essentiellement en forme de L, chaque élément de préhension (30,31), en particulier sa partie (36) portant la ventouse (32) prévue sur lui, dépassant le bout d'arbre d'entraînement (35) de l'autre élément de préhension (30,31), et que les deux éléments de préhension (30,31) se déplacent sur la même trajectoire.

11. Dispositif suivant l'une des revendications 1 à 10, caractérisé par le fait que des éléments d'entraînement (49) se déplaçant dans la direction de transport sont prévus pour pousser des objets (3) en forme de plaque depuis les éléments de préhension (30,31) se trouvant à la position de transfert, sur le début du dispositif transporteur.

12. Dispositif suivant la revendication 11, caractérisé par le fait que les éléments d'entraînement (49) sont fixés sur au moins un organe de transport sans fin (48) qui passe sur des roues d'entraînement et de renvoi (45,46,47), les roues d'entraînement (45) étant couplées avec l'arbre d'entraînement (40) pour la rotation des éléments de préhension (30,31).

13. Dispositif suivant l'une des revendications 8 à 12, caractérisé par le fait que les bouts d'arbre d'entraînement (35) sont des tronçons trubulaires emboîtés sur des bouts d'axe creux (33), l'application de la dépression à la ventouse (32) de l'élément de préhension (30,31) s'effectuant en passant par le bout d'arbre d'entraînement (35), le bout d'axe (33) et le levier (13,14) creux, le bout d'arbre d'entraînement (35) et le bout d'axe (33) comportant des trous (64) qui se recouvrent ou chevauchent lorsque l'élément de préhension (30,31) se déplace de la position de prélèvement vers la position de transfert, la liaison de l'élément de préhension (30,31) avec la source de dépression étant interrompue peu avant que l'élément de préhension (30,31) ait atteint la position de prélèvement.
